# EUROPÄISCHE PATENTSCHRIFT

(11) **EP 0 894 460 B1**
(45) Veröffentlichungstag und Bekanntmachung des Hinweises auf die Patenterteilung: **16.04.2003**
(21) Anmeldenummer: 98114258.1
(22) Anmeldetag: 30.07.1998
(51) Int. Cl.: A47J 27/16

(54) **Dampfgarofen**
Steam oven
Four à vapeur

(30) Priorität: 01.08.1997 DE 19733314
(43) Veröffentlichungstag der Anmeldung: 03.02.1999
(73) Patentinhaber: BSH Bosch und Siemens Hausgeräte GmbH, 81669 München (DE)
(72) Erfinder: Strolz, Bernd, 76456 Kuppenheim (DE); Anschütz, Eduard, 76571 Gaggenau (DE)
(74) Vertreter: Richter, Harald, Dr.

(56) Entgegenhaltungen:
- EP-A- 0 173 066
- EP-A- 0 360 715
- GB-A- 1 429 482
- GB-A- 2 229 353
- US-A- 5 595 109

## Beschreibung

Die Erfindung bezieht sich auf einen Dampfgarofen gemäß dem Oberbegriff des Anspruchs 1, vgl. EP-A-0 173 066.

Dampfgaröfen sind Öfen, in denen Speisen in heißem Wasserdampf gegart werden. Beim Betrieb des Dampfgarofens ist dessen Garraum mit Wasserdampf erfüllt, der durch eine Dampferzeugereinheit, die üblicherweise in dem Garraum angeordnet ist, erzeugt wird. Daneben sind bei manchen Dampfgaröfen weitere Betriebsphasen möglich, insbesondere ein Heißluftbetrieb zum Backen oder Braten.

Dampferzeugereinheiten für Dampfgaröfen sind beispielsweise aus der DE-U1-8717935 und aus der deutschen Patentanmeldung 19731544.5 "Dampfgarofen mit einer Dampferzeugereinheit" (angemeldet am 23. Juli 1997) bekannt. Weitere Dampfgaröfen sind in den folgenden Druckschriften beschrieben: DE 4333585 A1, FR 2625891 A1, DE 4303656 A1 und DE 4423557 A1.

Als Kondensationskorper wird das Bauteil bezeichnet, an dem die durch die Kühlflüssigkeit gekühlte Kühlfläche ausgebildet ist. Er ist an einer Wand der Muffel (einschließlich deren Decke) angeordnet und weist eine der Muffelwand vorgelagerte Zwischenwand auf, wobei die Kühlfläche von einer Oberfläche der Zwischenwand gebildet wird.

Zur Verbesserung des Nutzungswerts derartiger Dampfgaröfen, insbesondere um eine effektive Dampfablöschung zu gewährleisten ist bei einem Dampfgarofen der eingangs bezeichneten Art die Zwischenwand Teil einer Haube, die zur Vergrößerung der Kühlfläche Seitenwände und eine Bodenwand aufweist, die zur Huffelwand gerichtet sind.

Um den Dampf an der Kühlfläche vorbeizuführen und damit die Dampfablöschung zu beschleunigen, weist die Dampfablöschungsvorrichtung in einer bevorzugten Ausführung einen Lüfter auf.

Gegenstand der Erfindung ist auch ein Verfahren zum Betreiben eines solchen Dampfgarofens, bei dem die Kühlfläche des an der Wand der Muffel angeordneten Kondensationskörpers durch die zugeführte Kühlflüssigkeit so gekühlt wird, daß der in dem Garraum befindliche Dampf an der Kühlfläche kondensiert und damit ein störender Dampfaustritt beim Öffnen der Tür verhindert wird. Dieser Vorgang wird nachfolgend als Dampfablöschung bezeichnet.

Mit der erfindungsgemäßen Vorrichtung ist es möglich, den Dampf durch Kondensation so aus dem Garraum zu entfernen, daß beim Öffnen der Tür kein Dampf mehr in einem praktisch störenden Ausmaß entweicht. Dadurch werden die beschriebenen Folgen vermieden. Mittels der Dampfablöschungsvorrichtung kann ein großer Anteil des Dampfes so schnell abgelöscht werden, daß sie nicht lange Zeit vor dem Öffnen der Tür in Betrieb gesetzt werden muß, sondern in engem zeitlichen Zusammenhang mit dem Türöffnen eingeschaltet wird. Dabei ist ein zeitlicher Vorlauf (bevorzugt höchstens 30 Sekunden) desEinschaltens der Dampfablöschungsvorrichtung vor dem Öffnen der Tür vorteilhaft.

Gegenstand der Erfindung ist auch ein weiteres Verfahren zum Betreiben der erfindungsgemäßen Vorrichtung, bei dem bei der Überleitung von einer ersten Betriebsphase mit höherer Temperatur in eine zweite Betriebsphase mit niedrigerer Temperatur zur raschen Abkühlung des Garraums dem Kondensationskörper eine Kühlflüssigkeit zugeführt wird ("Temperaturschnellkontrolle")

Auch durch diese Betriebsweise wird ein wesentlicher Fortschritt der Gartechnik erreicht. Insbesondere beim Braten von Fleisch ist es vorteilhaft, die Poren des Bratens zunächst in einer ersten Betriebsphase des Ofens mit hoher Temperatur von beispielsweise mehr als 200 °C und trockner Luft zu schließen. Dies geschieht zweckmäßigerweise im Heißluftbetrieb, bei dem der Dampfgarofen entsprechend einem üblichen Heißluft-Backofen betrieben, (d.h. durch einen Heizkörper und einen Ventilator trockene Hitze in den Garraum transportiert) wird. Die erste Betriebsphase kann jedoch auch eine Hochtemperatur-Dampfphase oder eine Kombination aus Heißluftbetrieb und Dampfbetrieb sein. Nach dieser ersten Betriebsphase ist im Hinblick auf ein optimales Ergebnis des Garvorgangs eine rasche Abkühlung auf eine niedrigere Temperatur (beispielsweise etwa 100 °C) gewünscht, bei der das Gargut fertiggegart wird. Dies läßt sich durch die erfindungsgemäße. Temperaturschnellkontrolle erreichen. Auch die zweite Betriebsphase kann eine reine Dampfbetriebsphase, eine reine Heißluftphase oder eine Kombination aus beiden Betriebsweisen sein.

In den Zeichnungen sind Ausführungsbeispiele des erfindungsgemäßen Dampfgarofens schematisch dargestellt; es zeigen:
- Fig. 1: eine perspektivische Frontansicht eines Dampfgarofens,
- Fig. 2: eine Darstellung einer Dampfablöschungsvorrichtung aus Figur 1,
- Fig. 3: eine teilweise aufgeschnittene Darstellung der Dampfablöschungsvorrichtung aus Fig. 2,
- Fig. 4: eine perspektivische Darstellung einer Dampfablöschungsvorrichtung mit einer offenen Kühlflüssigkeitsführung,
- Fig. 5: eine perspektivische Darstellung einer Dampfablöschungsvorrichtung mit einer alternativen Ausführung einer offenen Kühlflüssigkeitsführung,
- Fig. 6: eine perspektivische Darstellung einer Dampfablöschungsvorrichtung mit einer dritten Ausführung einer offenen Kühlflüssigkeitsführung,
- Fig. 7: eine perspektivische Darstellung einer Dampfablöschungsvorrichtung mit einer geschlossenen Kühlflüssigkeitsführung und
- Fig. 8: eine perspektivische Darstellung der Dampfablöschungsvorrichtung mit einer alternativen Ausführung einer geschlossenen Kühlflüssigkeitsführung.

Bei der Beschreibung der in den Figuren dargestellten Ausführungsform wird nachfolgend ohne Beschränkung der Allgemeinheit auf die Betriebsweise "Dampfablöschung" Bezug genommen. Entsprechend wird die Vorrichtung, obwohl sie in gleicher Weise auch für das Betriebsverfahren "Temperaturschnellkontrolle" geeignet ist, beispielhaft und ohne Beschränkung der Allgemeinheit als "Dampfablöschungsvorrichtung" bezeichnet.

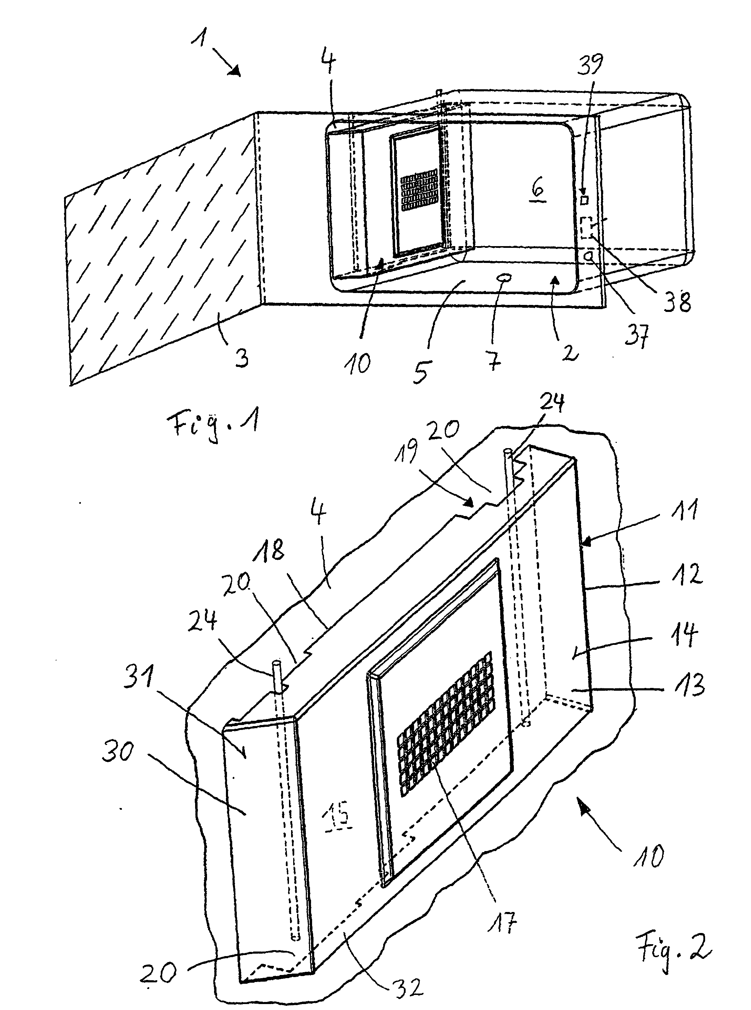

Figur 1 zeigt einen Dampfgarofen 1 mit einem durch eine Tür 3 verschließbaren Garraum 6. Die thermische Begrenzung des Garraumes 6 wird durch eine diesen umschließende Muffel 2 gebildet. In dem Garraum 6 ist vor einer Muffelwand 4 eine Dampfablöschungsvorrichtung 10 angeordnet. Bevorzugt ist sie an einer Seitenwand der Muffel 2 angebracht, damit sie für eine erforderliche Reinigung gut zugänglich ist. In dem Boden 5 der Muffel 2 ist ein Ablauf 7 vorgesehen, um kondensiertes Wasser aus dem Garraum 6 abzuführen. Zum Einschalten der Dampfablöschungsvorrichtung 10 dient ein Schalter 37, der unabhängig vom Öffnen der Tür 3, beispielsweise mittels eines Druckknopfes, betätigt werden kann. Er ist mit einer Zeitsteuerschaltung 38 gekoppelt, die ein Signal 39 für das Öffnen der Tür 3, hier ein optisches Signal 39 in Form einer aufleuchtenden Lampe, steuert.

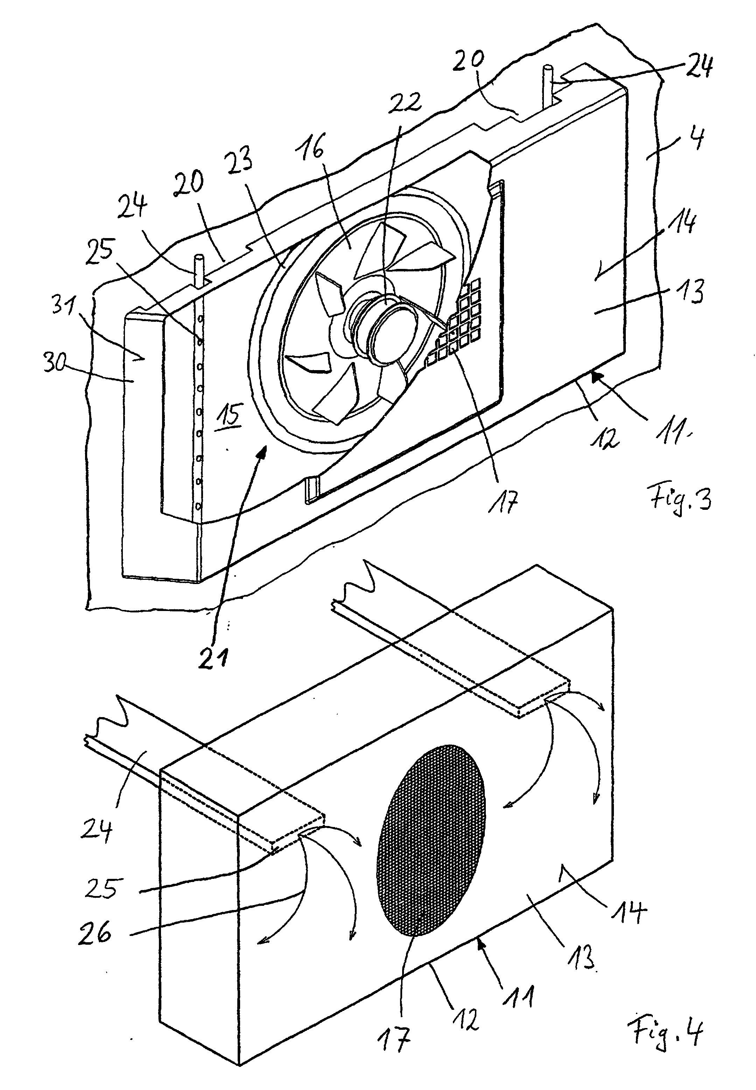

Wie in den Figuren 2 und 3 zu sehen ist, weist die Dampfablöschungsvorrichtung 10 einen an der Muffelwand 4 angeordneten Kondensationskörper 11 auf, der als Haube 12 ausgebildet ist. An einer der Muffelwand 4 vorgelagerten Zwischenwand 13 der Haube 12 ist eine Kühlfläche 14 ausgebildet. Die Haube 12 ist vorzugsweise abnehmbar an der Muffelwand 4 angebracht, um sie, hinter ihr liegende Bauteile und die Muffel 2 leichter reinigen zu können. Mindestens die Zwischenwand 13 besteht aus einem wärmeleitenden Material, bevorzugt einem korrosionsfesten Metall, besonders bevorzugt aus Edelstahl.

Der Kondensationskörper 11 ist als Haube 12 (mit Seitenwänden 30) ausgebildet. Zur Oberflächen- und damit Kühlflächenvergrößerung kann die Zwischenwand Wölbungen aufweisen.

In Verbindung mit der Muffelwand 4 umgrenzt die Haube 12 einen im wesentlichen geschlossenen Raum 15, in dem, wie Figur 3 zeigt, ein Lüfter 16, der von einem nicht dargestellten Antriebsmotor angetrieben wird, angeordnet ist. Er dient dazu, den Dampf zum Kondensieren an der Kühlfläche 14 vorbeizuführen. Bei dem zwischen Muffelwand 4 und Zwischenwand 13 angeordneten Lüfter 16 handelt es sich vorzugsweise um einen Radiallüfter, der den Dampf längs seiner Drehachse ansaugt und ihn in radiale Richtung wegbläst. Dazu ist an der Zwischenwand 13 der Haube 12 eine zentrale, mit der Ansaugrichtung des Lüfters korrespondierende Dampfansaugöffnung 17 vorgesehen, die vergittert ist. Die Haube 12 weist an ihrem Rand 18 Ausnehmungen 19 auf, die als periphere Auslaßöffnungen 20 für die von dem Lüfter 16 weggeblasene Luft dienen. Der Lüfter 16 ist vorzugsweise derartig angeordnet und ausgebildet, daß er eine Strömung des Dampfs entlang der Kühlfläche bewirkt. Zu diesem Zweck ist der dargestellte Radiallüfter besonders vorteilhaft, insbesondere wenn er - ebenfalls wie dargestellt - hinter der Zwischenwand 13 angeordnet ist. Eine geeignete Dampfströmung läßt sich jedoch auch mit anderen Lüftertypen erreichen.

In Figur 3 ist eine an der Muffelwand 4 angeordnete, vorzugsweise gemäß der deutschen Patentanmeldung 19731544.5 "Dampfgarofen mit einer Dampferzeugereinheit" (angemeldet am 23. Juli 1997) ausgebildete Dampferzeugereinheit 21 des Dampfgarofens 1 zu erkennen. Diese hat ein im Betrieb der Einheit um eine Achse rotierendes Verteilerrad 22, einen das Verteilerrad 22 ringförmig umgebenden Heizkörper 23 und eine nicht dargestellte Wasserzuführungsleitung zum Zuführen von Wasser auf das Verteilerrad 22. Der Lüfter 16 rotiert mit dem Verteilerrad 22 um eine gemeinsame horizontale Achse. Er dient als Bestandteil der Dampferzeugereinheit 21 zum Umwälzen von Luft und Dampf und zugleich als Lüfter 16 der Dampfablöschungsvorrichtung 10. Durch die doppelte Funktion des Lüfters 16 wird der konstruktive und technische Aufwand reduziert. Die Dampferzeugereinheit 21 muß jedoch nicht hinter der Zwischenwand 13 angeordnet sein, sondern kann sich auch an einer anderen Muffelwand 4 oder sogar außerhalb des Garraumes 6 befinden.

Als Kühlflüssigkeit zum Kühlen der Kühlfläche 14 wird vorzugsweise Leitungswasser verwendet, weil es kostengünstig und lebensmittelverträglich ist. Insbesondere wenn die Kühlung der Kühlfläche 14 derart erfolgt, daß die Kühlflüssigkeit keinen Kontakt zur Atmosphäre des Garraumes 6 hat, kann auch eine andere Flüssigkeit als Kühlflüssigkeit verwendet werden. Ohne Beschränkung der Allgemeinheit wird im folgenden auf Wasser als Beispiel für die Kühlflüssigkeit Bezug genommen.

Die Dampfablöschungsvorrichtung 10 hat mindestens eine Zuführungsleitung 24, die kaltes Wasser aus dem Wasserleitungsnetz zuführt. Das Wasser muß dabei so kalt sein, daß die warme Kühlfläche 14 ausreichend schnell gekühlt wird. Übliche Leitungswassertemperaturen (von maximal 20 °C) haben sich als ausreichend erwiesen.

Die Kühlung der Kühlfläche 14 kann auf unterschiedliche Weisen realisiert sein:

In den Figuren 1 bis 3 ist eine offene Kühlflüssigkeitsführung (bei der die Kühlflüssigkeit an dem Kondensationskörper 11 in Kontakt zu der umgebenden Atmosphäre steht) gezeigt, die im folgenden anhand der Figuren 4 bis 6 näher erläutert wird. Bei den dargestellten Ausführungen sind jeweils zwei Zuführungsleitungen 24 vorhanden, die jeweils mindestens eine Öffnung 25 haben, durch die Wasser als offener Strahl (Pfeile 26) austritt. Die Öffnungen 25 sind dabei so ausgerichtet, daß das Wasser (unter Berücksichtigung der Schwerkraft und des in der Zuführungsleitung 24 herrschenden Wasserdrucks) auf eine von dem Dampfgarraum 6 abgewandte, d.h. der benachbarten Muffelwand zugewandte rückseitige Oberfläche der Zwischenwand 13 auftrifft, wobei möglichst kein Wasser auf den heißen Heizkörper 23 der Dampferzeugereinheit 21 gelangt. Das auf die Oberfläche aufgetroffene Wasser verteilt sich auf ihr und rinnt an ihr herunter, wobei es der Zwischenwand 13 Wärme entzieht, d.h. die Kühlfläche 14 kühlt.

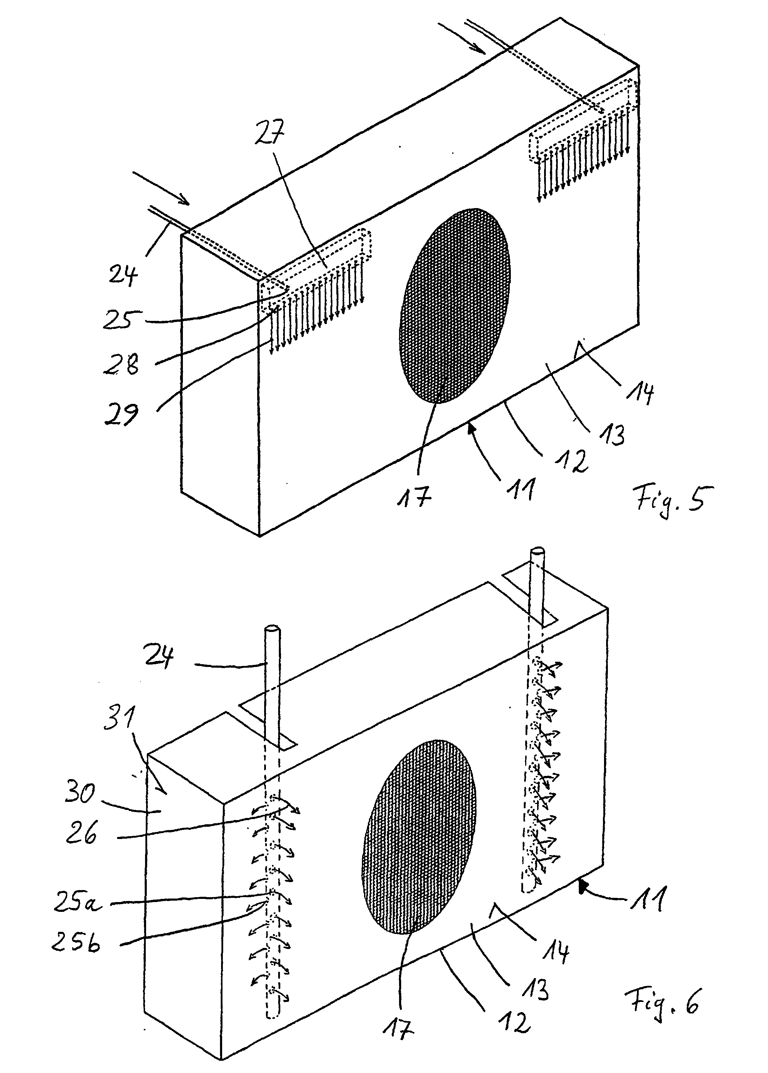

Um eine große Kühlfläche 14 zu schaffen, wird das Kühlwasser auf eine möglichst große Oberfläche verteilt. Zu diesem Zweck weisen die Zuführungsleitungen 24 in Figur 4 jeweils eine Breitstrahlöffnung 25 auf. In Figur 5 dagegen enden die Zuführungsleitungen 24 jeweils in einem an der Rückseite der Zwischenwand 13 vorgesehenen Verteileraufsatz 27, der das zugeführte Wasser in die Breite verteilt. Durch in dem Verteileraufsatz 27 vorhandene Löcher 28 tritt das Wasser nach unten aus und fließt an der Oberfläche breitflächig hinunter (symbolisiert durch die Pfeile 29). In Figur 6 verlaufen die beiden Zuführungsleitungen 24 mindestens in ihren hinter der Haube 12 verlaufenden Endabschnitt parallel zur Zwischenwand 13. Sie haben jeweils mehrere Öffnungen 25a,25b, durch die die Wasserstrahlen 26 austreten und eine große Oberfläche der Zwischenwand 13 benetzen. In den Zuführungsleitungen 24 sind neben den auf die Zwischenwand 13 gerichteten ersten Öffnungen 25a, vorzugsweise auch zweite Öffnungen 25b vorhanden, durch die das austretende Wasser auf die rückseitige Oberfläche der Seitenwände 30 der Haube 12 gerichtet wird. Durch diese konstruktive Maßnahme werden somit auch an den Seitenwänden 30 der Haube 12 Kühlflächen 31 gebildet, wodurch mehr Dampf in derselben Zeit kondensieren kann.

Die beschriebenen Ausführungsformen haben jeweils zwei Zuführungsleitungen 24, um eine große Oberfläche zu benetzen. Selbstverständlich können je nach Größe und Form des Kondensationskörpers 11 mehr oder weniger Zuführungsleitungen 24 vorhanden sein. Zur besseren Verteilung des Wassers auf der Oberfläche des Kondensationskörpers 11 kann diese eine geeignete Oberflächenstrukturierung aufweisen.

Um zu vermeiden, daß die Zuführungsleitungen 24 durch aus dem Wasser ausgeschiedenen Kalk verstopfen, können diese vorteilhafterweise unterhalb der Austrittsöffnungen 25 einen Aufnahmeraum in Form eines "toten Endes", das nicht durchströmt wird, haben. Er dient dazu, den ausgeschiedenen Kalk aufzunehmen.

Zur Abführung des Wassers weist die Dampfablöschungsvorrichtung 10 eine Kühlflüssigkeitsabführung auf, die bei den in den Figuren 1 bis 5 gezeigten Ausführungsbeispielen mit offener Kühlflüssigkeitsführung den Boden 32 der Haube 12, den Boden 5 der Muffel 2 und einen darin vorhandenen Ablauf 7 (vgl. insbesondere Figuren 1 und 2) umfaßt. Das Wasser sammelt sich auf dem Haubenboden 32 und fließt von dort auf den Boden 5 der Muffel 2. Dort wird es durch einen Ablauf (bei dem es sich vorzugsweise um den gleichen Ablauf 7 handelt, der auch das kondensierte Wasser entfernt) abgeführt. Die Kühlflüssigkeit und das kondensierte Wasser werden somit gemeinsam entfernt. Für die Kühlflüssigkeitsabführung sind zahlreiche Varianten möglich. Beispielsweise kann an dem Haubenboden 32 ein gesonderter Ablauf ausgebildet sein, an dem eine Abführungsleitung angeschlossen ist. Eine gesonderte Kühlflüssigkeitsabführung ist insbesondere erforderlich, wenn die Kühlfläche 14 direkt an einer Muffelwand 4 ausgebildet ist.

Insgesamt ist es vorteilhaft, wenn die Kühlfläche 14 möglichst groß ist. Bei der dargestellten Ausführungsform bildet sowohl die Vorderseite als auch die Rückseite der Zwischenwand 13 einen Teil der Gesamt-Kühlfläche 14. Eine weitere Vergrößerung der wirksamen Kühlfläche läßt sich dadurch bewirken, daß der Boden 5 in Verbindung mit einem darin vorgesehenen Ablauf 7 so gestaltet ist, daß die abfließende Kühlflüssigkeit nur langsam abfließt und dabei eine möglichst große Flüssigkeitsoberfläche auf dem Boden 5 bildet.

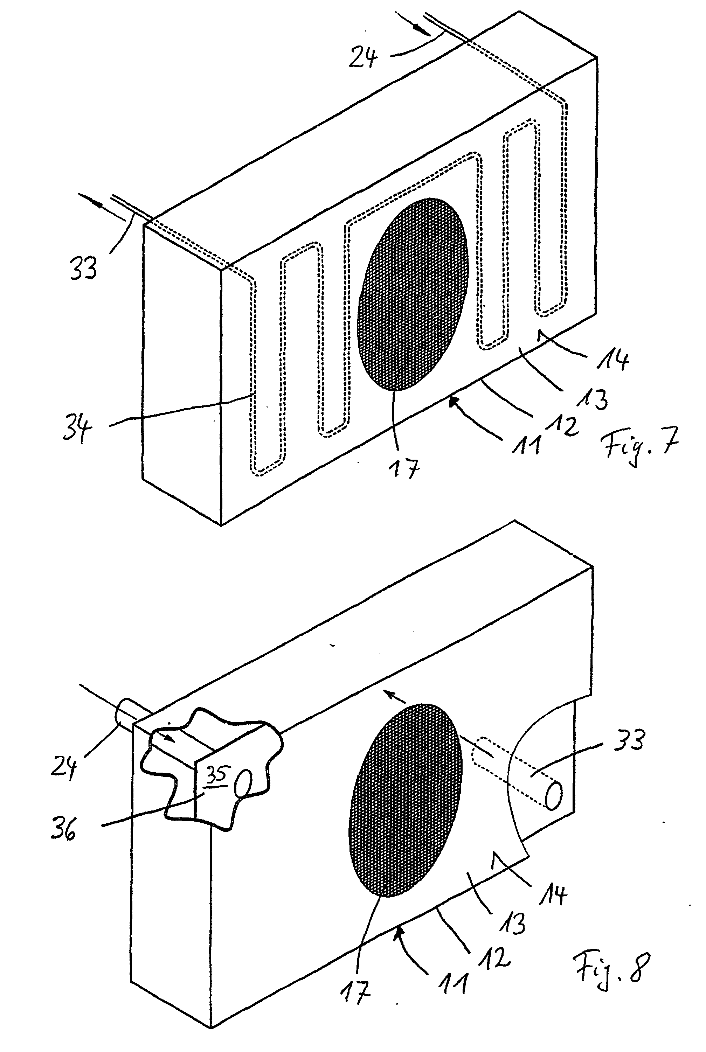

In den Figuren 7 und 8 weist der Kondensationskörper 11 zur Kühlung der Kühlfläche 14 eine geschlossene Kühlflüssigkeitsführung auf, bei der das Wasser ohne Kontakt zur Umgebungsluft durch einen Hohlraum im Innern des Kondensationskörpers strömt. Die Dampfablöschungsvorrichtung 10 hat jeweils eine Zuführungsleitung 24 und eine Abführungsleitung 33. Diese sind in Figur 7 über eine an der Rückseite der Zwischenwand 13 entlang geführte Kühlschlange 34 bzw. in Figur 8 über einen geschlossenen Kühlraum 35, der im wesentlichen von der Zwischenwand 13 und einer rückwärtigen Zusatzwand 36 gebildet wird, miteinander verbunden. Um die Haube 12 abnehmen zu können, sind an der Zuführungsleitung 24 und an der Abführungsleitung 33 vorteilhafterweise Anschlußstücke vorhanden, die die Positionierung der Haube 12 erleichtern und die Dichtigkeit der Leitungen gewährleisten.

Bei einer geschlossenen Kühlflüssigkeitsführung kann es vorteilhaft sein, wenn das Wasser zum Kühlen der Kühlfläche 14 wiederverwendet, d.h. in einem vollständig geschlossenen Kreislauf geführt wird. Dazu hat die Dampfablöschungsvorrichtung einen Vorratsbehälter, aus dem Wasser gefördert und in die Zuführungsleitung eingespeist wird. Nach dem Durchströmen des Kondensationskörpers wird das Kühlwasser durch die Abführungsleitung in den Vorratsbehälter zurückgeleitet, wo es gekühlt wird.

Um den in dem Garraum 6 befindlichen Dampf abzulöschen, wird die Dampfablöschungsvorrichtung 10 mit einem Vorlauf vor dem Türöffnen betrieben, wobei der Vorlauf die Zeitdifferenz zwischen dem Einschalten der Dampfablöschungsvorrichtung 10 durch Betätigen des Schalters 37 und dem Zeitpunkt des Türöffnens ist. Durch das Betätigen des Schalters 37 wird auch die mit ihm gekoppelte Zeitsteuerschaltung, die eine interne Uhr hat, eingeschaltet. Um die Kühlfläche 14 zu kühlen, wird das Wasser, wie oben beschrieben (mittels einer offenen oder einer geschlossenen Kühlflüssigkeitsführung), an dem Kondensationskörper 11 entlang geführt. Während mindestens die Wasserzuführung der Dampferzeugereinheit 21, vorzugsweise auch ihr Heizkörper 23, ausgeschaltet ist, läuft der Lüfter 16, der unabhängig von dem Betrieb der Dampferzeugereinheit 21 betrieben werden kann. Von dem Lüfter 16 wird der Dampf durch die Ansaugöffnung 17 der Zwischenwand 13 längs dessen Drehachse angesaugt. Dadurch entsteht eine Luftströmung, die den Dampf an der Kühlfläche 14 vorbeiführt, wo er kondensiert. Ein anderer Teil des Dampfes gelangt in den im wesentlichen umschlossenen Raum 15 zwischen Muffelwand 4 und Haube 12. Dort kondensiert er an inneren Kühlflächen bzw. wird (im Falle einer offenen Kühlflüssigkeitsführung) durch vorhandenes offen strömendes Wasser gekühlt. Das kondensierte Wasser sammelt sich mit dem Kühlwasser am Boden 5 der Muffel 2 und läuft zu dem Abfluß 7, durch den es aus dem Garraum 6 abgeführt wird. Nach Ablauf einer durch die Zeitsteuerschaltung 38 vorbestimmten Vorlaufzeit wird durch die Zeitsteuerschaltung 38 die Lampe eingeschaltet, die anzeigt, daß die Tür 3 nun geöffnet werden kann. Die Zeitsteuerschaltung 38 kann auch eine Sperre der Tür 3 so steuern, daß diese während der Vorlaufzeit nicht geöffnet werden kann.

Überraschenderweise ist es mit dem beschriebenen Verfahren und der beschriebenen Vorrichtung zur Dampfablöschung möglich, mit einem Vorlauf von höchstens dreißig Sekunden, bevorzugt höchstens 15 Sekunden, zu arbeiten. In dieser Zeit wird der Dampf nahezu vollständig abgelöscht und dadurch der Austritt von Dampf in die Küche entscheidend reduziert. Dies ist umso erstaunlicher, als die Dampfablöschung in den erläuterten bevorzugten Ausführungsformen ganz in der Nähe der üblicherweise noch warmen Dampferzeugereinheit 21 erfolgt.

Bei der Betriebsweise "Temperaturschnellkontrolle" kann die gleiche Vorrichtung unverändert verwendet werden, wobei lediglich die Programmsteuerung des Dampfgarofens entsprechend modifiziert wird. Beispielsweise kann in einer Heißluftbetriebsphase der Lüfter 16 in Verbindung mit dem Heizkörper 23 betrieben werden, ohne daß Dampf erzeugt wird. Zum raschen Übergang in eine Dampfgar- oder Heißluftphase mit niedrigerer Temperatur wird der Heizkörper 23 abgeschaltet und dem Kondensationskörper 11 Kühlwasser zugeführt. Sobald die Temperatur in dem Garraum 6 auf den gewünschten Wert abgesunken ist, kann der Heißluftbetrieb mit niedrigerer Temperatur oder ein Dampfgarbetrieb aufgenommen werden, je nachdem welche Betriebsweise für das jeweilige Gargut optimal ist.

## Patentansprüche

1. Dampfgarofen mit einem von einer Muffel (2) und einer Tür (3) umschlossenen Garraum (6), einer Dampferzeugereinheit (21) zur Erzeugung von Wasserdampf und einem Ablauf (7) zum Entfernen von kondensiertem Wasser aus dem Garraum (6), einem an einer Wand (4) der Muffel (2) angeordneten Kondensationskörper (11), der eine durch eine Kühlflüssigkeit gekühlte Kühlfläche (14), an der der Wasserdampf kondensiert, aufweist, einer Zuführungsleitung (24) zum Zuführen von Kühlflüssigkeit und einer Kühlflüssigkeitsabführung zum Abführen der Kühlflüssigkeit, wobei der Kondensationskörper (11) eine der Muffelwand (4) vorgelagerte Zwischenwand (13) aufweist, an der die Kühlfläche (14) ausgebildet ist, **dadurch gekennzeichnet, dass** die Zwischenwand (13) Teil einer Haube (12) ist, die zur Vergrößerung der Kühlfläche (14) Seitenwände (30) und eine Bodenwand (32) aufweist, die zur Muffelwand (4) gerichtet sind.

2. Dampfgarofen nach Anspruch 1, **dadurch gekennzeichnet, daß** er einen Lüfter (16) aufweist, um eine Dampfströmung entlang der Kühlfläche (14) zu erzeugen.

3. Dampfgarofen nach Anspruch 2, **dadurch gekennzeichnet, daß** der Lüfter (16) zwischen der Muffelwand (4) und der Zwischenwand (13) angeordnet ist.

4. Dampfgarofen nach Anspruch 3, **dadurch gekennzeichnet, daß** der Lüfter (16) ein Radiallüfter ist, der den Dampf längs seiner Drehachse ansaugt und ihn in radiale Richtung wegbläst, und daß die Haube (12) periphere Auslaßöffnungen (20) und die Zwischenwand (13) eine zentrale Ansaugöffnung (17) für den Dampf aufweisen.

5. Dampfgarofen nach Anspruch 3 oder 4, **dadurch gekennzeichnet, daß** die Dampferzeugereinheit (21) einen an der Muffelwand (4) angeordneten Lüfter (16) aufweist, dem die Zwischenwand (13) der Dampfablöschungsvorrichtung (10) vorgelagert ist, so daß der Lüfter der Dampferzeugereinheit (21) zugleich als Lüfter der Dampfablöschungsvorrichtung (10) dient.

6. Dampfgarofen nach einem der vorhergehenden Ansprüche, **dadurch gekennzeichnet, daß** der Kondensationskörper (11) zur Kühlung der Kühlfläche (14) eine offene Kühlflüssigkeitsführung aufweist, wobei die Zuführungsleitung (24) für die Kühlflüssigkeit mindestens eine Öffnung (25) hat, die so angeordnet und ausgerichtet ist, daß die Kühlflüssigkeit auf eine Oberfläche des Kondensationskörpers (11) auftrifft, sich auf ihr verteilt und an ihr herunterrinnt.

7. Dampfgarofen nach Anspruch 6 in Verbindung mit einem der Ansprüche 3 bis 5, **dadurch gekennzeichnet, daß** die Kühlflüssigkeit auf die der benachbarten Muffelwand (4) zugewandte rückseitige Oberfläche der Zwischenwand (13) auftrifft.

8. Dampfgarofen nach einem der Ansprüche 1 bis 5, **dadurch gekennzeichnet, daß** der Kondensationskörper (11) zur Kühlung der Kühlfläche (14) eine geschlossene Kühlflüssigkeitsführung aufweist.

9. Dampfgarofen nach einem der vorhergehenden Ansprüche, **dadurch gekennzeichnet, daß** er einen unabhängig von dem Öffnen der Tür (3) betätigbaren Schalter (37) für die Dampfablöschungsvorrichtung (10) und eine mit dem Schalter gekoppelte Zeitsteuerschaltung (38) aufweist, durch die ein Signal (39) gesteuert wird, welches anzeigt, daß die Tür (3) geöffnet werden kann.

10. Verfahren zum Betreiben eines Dampfgarofens nach einem der vorhergehenden Ansprüche, **dadurch gekennzeichnet, daß** die Kühlfläche (14) durch eine dem Kondensationskörper zugeführte Kühlflüssigkeit so gekühlt wird, daß der in dem Garraum (6) befindliche Dampf zur Verminderung der beim Öffnen der Tür (3) austretenden Dampfmenge an der gekühlten Kühlfläche (14) kondensiert.

11. Verfahren zum Betreiben eines Dampfgarofens nach einem der vorhergehenden Ansprüche, **dadurch gekennzeichnet, daß** bei der Überleitung von einer ersten Betriebsphase mit höherer Temperatur in eine zweite Betriebsphase mit niedrigerer Temperatur zur raschen Abkühlung der in dem Garraum (6) herrschenden Temperatur dem Kondensationskörper (11) Kühlflüssigkeit zugeführt wird.

12. Verfahren nach Anspruch 11, **dadurch gekennzeichnet, daß** die erste Betriebsphase eine Heißluft-Betriebsphase und die zweite Betriebsphase eine Dampfgar-Betriebsphase ist.

## Claims

1. Steam cooking oven with a cooking chamber (6) enclosed by a muffle (2) and a door (3), a steam generating unit (21) for producing water steam and a drain (7) for removing condensed water from the cooking chamber (6), a condensation body (11) which is arranged at a wall (4) of the muffle (2) and which comprises a cooling surface (14), which is cooled by a cooling liquid and at which the water steam condensers, a feed duct (24) for the feed of cooling liquid and a cooling liquid discharge for discharging cooling liquid, wherein the condensation body (11) has an intermediate wall (13) which is premounted at the muffle wall (4) and at which the cooling surface (14) is formed, **characterised in that** the intermediate wall (13) is part of a hood (12) which has, for enlarging the cooling surface (14), side walls (30) and a base wall (32) which are directed towards the muffle wall (4).

2. Steam cooking oven according to claim 1, **characterised in that** it comprises a fan (16) in order to produce a steam flow along the cooling surface (14).

3. Steam cooking oven according to claim 2, **characterised in that** the fan (16) is arranged between the muffle wall (4) and the intermediate wall (13).

4. Steam cooking oven according to claim 3, **characterised in that** the fan (16) is a radial fan which inducts the steam along its axis of rotation and blows it away in radial direction, and that the hood (12) has peripheral outlet openings (20) and the intermediate wall (13) has a central intake opening (17) for the steam.

5. Steam cooking oven according to claim 3 or 4, **characterised in that** the steam generating unit (21) comprises a fan (16), which is arranged at the muffle wall (4) and at which the intermediate wall (13) of the steam quenching device (10) is premounted, so that the fan of the steam generating unit (21) at the same time serves as fan of the steam quenching device (10).

6. Steam cooking oven according to one of the preceding claims, **characterised in that** the condensation body (11) has, for cooling the cooling surface (14), an open cooling liquid guide, wherein the feed duct (24) for the cooling liquid has at least one opening (25) which is so arranged and oriented that the cooling liquid impinges on a surface of the condensation body (11), distributes thereon and drips down thereat.

7. Steam cooking oven according to claim 6 in conjunction with one of claims 3 to 5, **characterised in that** the cooling liquid impinges on the rearward surface, which faces the adjacent muffle wall (4), of the intermediate wall (13).

8. Steam cooking oven according to one of claims 1 to 5, **characterised in that** the condensation body (11) has, for cooling the cooling surface (14), a closed cooling liquid guide.

9. Steam cooking oven according to one of the preceding claims, **characterised in that** it comprises a switch (37), which is actuable independently of opening of the door (3), for the steam quenching device (10) and a time control circuit (38) coupled with the switch, by which a signal (39) is controlled which indicates that the door (3) can be opened.

10. Method for operating a steam cooking oven according to one of the preceding claims, **characterised in that** the cooling surface (14) is so cooled by a cooling liquid fed to the condensation body that the steam disposed in the cooking chamber (6) condenses at the cooled cooling surface (14) for reduction in the quantity of steam issuing on opening of the door (3).

11. Method for operating a steam cooking oven according to one of the preceding claims, **characterised in that**, on transition from a first operating phase at higher temperature to a second operating phase at lower temperature, cooling liquid is fed to the condensation body (11) for rapid cooling down of the temperature prevailing in the cooking chamber (6).

12. Method according to claim 11, **characterised in that** the first operating phase is a hot-air operating phase and the second operating phase is a steam-cooking operating phase.

## Revendications

1. Four à vapeur comprenant une chambre de cuisson (6) entourée d'un moufle (2) et d'une porte (3), une unité génératrice de vapeur (21) pour générer de la vapeur d'eau et un écoulement (7) pour éliminer l'eau condensée de la chambre de cuisson (6), un corps de condensation (11) disposé sur une paroi (4) du moufle (2) et qui comprend une surface de refroidissement (14) refroidie par un fluide réfrigérant sur laquelle la vapeur d'eau se condense, une conduite d'amenée (24) pour amener un fluide réfrigérant et une évacuation de fluide réfrigérant pour évacuer le fluide réfrigérant, le corps de condensation (11) comprenant une paroi intermédiaire (13) montée devant la paroi (4) du moufle et sur laquelle est réalisée la surface de refroidissement (14), **caractérisé en ce que** la paroi intermédiaire (13) fait partie d'un capot (12) qui, pour augmenter la surface de refroidissement (14), comprend des parois latérales (30) et une paroi de fond (32) dirigées vers la paroi (4) du moufle.

2. Four à vapeur selon la revendication 1, **caractérisé en ce qu'**il comprend un ventilateur (16) pour produire un courant de vapeur le long de la surface de refroidissement (14).

3. Four à vapeur selon la revendication 2, **caractérisé en ce que** le ventilateur (16) est disposé entre la paroi (4) du moufle et la paroi intermédiaire (13).

4. Four à vapeur selon la revendication 3, **caractérisé en ce que** le ventilateur (16) est un ventilateur radial qui aspire la vapeur le long de son axe de rotation et la souffle en direction radiale et **en ce que** le capot (12) comprend des orifices d'échappement périphériques (20) et la paroi intermédiaire (13) un orifice d'aspiration central (17) pour la vapeur.

5. Four à vapeur selon la revendication 3 ou 4, **caractérisé en ce que** l'unité génératrice de vapeur (21) comprend un ventilateur (16) disposé sur la paroi (4) du moufle et devant lequel est montée la paroi intermédiaire (13) du dispositif de suppression de vapeur (10), de sorte que le ventilateur de l'unité génératrice de vapeur (21) sert en même temps de ventilateur du dispositif de suppression de vapeur (10).

6. Four à vapeur selon l'une des revendications précédentes, **caractérisé en ce que** le corps de condensation (11) comprend un conduit de fluide réfrigérant ouvert pour refroidir la surface de refroidissement (14), la conduite d'amenée (24) pour le fluide réfrigérant ayant au moins un orifice (25) disposé et orienté de telle manière que le fluide réfrigérant arrive sur une surface du corps de condensation (11), se répartit sur celle-ci et s'écoule le long de celle-ci.

7. Four à vapeur selon la revendication 6 en rapport avec l'une des revendications 3 à 5, **caractérisé en ce que** le fluide réfrigérant arrive sur la surface arrière tournée vers la paroi (4) adjacente du moufle de la paroi intermédiaire (13).

8. Four à vapeur selon l'une des revendications 1 à 5, **caractérisé en ce que** le corps de condensation (11) comprend un conduit de fluide réfrigérant fermé pour refroidir la surface de refroidissement (14).

9. Four à vapeur selon l'une des revendications précédentes, **caractérisé en ce qu'**il comprend un commutateur (37) actionnable indépendamment de l'ouverture de la porte (3) pour le dispositif de suppression de vapeur (10) et un circuit de commande temporisée (38) couplé au commutateur commandant un signal (39) qui indique que la porte (3) peut être ouverte.

10. Procédé pour exploiter un four à vapeur selon l'une des revendications précédentes, **caractérisé en ce que** la surface de refroidissement (14) est refroidie par un fluide réfrigérant amené au corps de condensation de telle manière que la vapeur se trouvant dans la chambre de cuisson (6) se condense sur ladite surface de refroidissement (14) refroidie pour diminuer la quantité de vapeur s'échappant à l'ouverture de la porte (3).

11. Procédé pour exploiter un four à vapeur selon l'une des revendications précédentes, **caractérisé en ce que** lors du passage d'une première phase de fonctionnement à température plus élevée à une deuxième phase de fonctionnement à température moins élevée, du fluide réfrigérant est amené au corps de condensation (11) pour obtenir un abaissement rapide de la température régnant dans la chambre de cuisson (6).

12. Procédé selon la revendication 11, **caractérisé en ce que** la première phase de fonctionnement est une phase de fonctionnement à air chaud et la deuxième phase de fonctionnement une phase de fonctionnement à vapeur.
